Europäisches Patentamt

European Patent Office

Office européen des brevets

(19)

(11) Publication number: **0 249 336 B1**

## EUROPEAN PATENT SPECIFICATION

(45) Date of publication of patent specification: **15.01.92**  (51) Int. Cl.⁵: **B29C 45/16**, C08L 83/04

(21) Application number: **87304192.5**

(22) Date of filing: **12.05.87**

(54) Method for producing a silicone rubber and thermoplastic resin composite.

(30) Priority: **13.05.86 JP 109229/86**

(43) Date of publication of application:
**16.12.87 Bulletin 87/51**

(45) Publication of the grant of the patent:
**15.01.92 Bulletin 92/03**

(84) Designated Contracting States:
**DE FR GB IT**

(56) References cited:
**EP-A- 0 057 547**
**EP-A- 0 069 451**
**US-A- 3 960 804**
**US-A- 4 442 243**
**US-A- 4 505 848**

**CHEMICAL ABSTRACTS, vol. 99, 1983, page 51, no. 54883c, Columbus, Ohio, US; & JP-A-58 21 447 (SHIN-ETSU POLYMER CO., LTD) 08-02-1983**

(73) Proprietor: **Toray Silicone Company, Ltd.**
**8, 2-chome Muro-machi Nihonbashi**
**Chuo-ku Tokyo 103(JP)**

(72) Inventor: **Shimizu, Koji**
**25-14, 4-chome, Aobadai**
**Ichihara-shi Chiba Prefecture(JP)**
Inventor: **Saito, Masayuki**
**6, 1-chome, Yushudai Nishi**
**Ichihara-shi Chiba Prefecture(JP)**
Inventor: **Hamada, Mitsuo**
**5-17, 3-chome, Ohkubo**
**Kisarazu-shi Chiba Prefecture(JP)**

(74) Representative: **Laredo, Jack Joseph et al**
**Elkington and Fife Prospect House 8 Pembroke Road**
**Sevenoaks, Kent TN13 1XR(GB)**

Rank Xerox (UK) Business Services

## Description

The present invention relates to a method for producing a molded composite comprising at least one silicone rubber and at least one thermoplastic organic resin.

EP-A-0057547, US-A-4,442,243 and US-A-4,505,848 describe the fabrication of composites comprising a layer of a thermoplastic organic resin and a cured silicone rubber by introducing into the same mold cavity an unvulcanized silicone rubber composition and a preformed molding prepared by injection molding of the thermoplastic resin. These materials are then pressure molded with heating. This method suffers from several problems. The thermoplastic molding is readily susceptible to deformation as a consequence of the heating involved during the pressure molding operation, and a composite with a high dimensional accuracy often cannot be produced. Also, the production rate of the resultant composite is very low.

The objective of the present invention is to eliminate the aforementioned problems by providing a highly productive method for manufacturing silicone rubber/thermoplastic resin composites having a high dimensional accuracy.

We have now found that the aforementioned objective can be realized by just injecting a thermoplastic resin into a mold cavity and allowing the resin to solidify and then introducing a curable liquid silicone rubber composition into the same cavity and curing the liquid silicone composition at a temperature of from 25 degrees C up to and including the softening point of the thermoplastic resin.

This invention provides a method for injection molding composites comprising at least one layer of a silicone rubber and at least one layer of thermoplastic organic resin, comprising the steps of:

1) injecting a thermoplastic organic resin into the interior of a cavity formed from at least one metal mold,

2) allowing said resin to solidify,

3) injecting a curable liquid silicone rubber composition into the mold cavity which is partially occupied by the solidified thermoplastic resin,

4) optionally repeating the sequence of steps 1), 2) and 3), and

5) curing the liquid silicone rubber composition at a temperature of from 25 degrees C up to and including the softening point of said thermoplastic resin.

A particular feature of the improved method of the present invention is the curing temperature of the curable silicone rubber composition, which is from 25 degrees C. up to and including the softening point of said thermoplastic resin.

The present method allows highly productive manufacture of silicone resin/thermoplastic resin composites having a high dimensional accuracy.

The only specific restriction placed on the thermoplastic organic resin used in the present method is that it be injection-moldable. Examples of such resins are nylon 6 resins, nylon 66 resins, polystyrene, styrene-butadiene copolymer resins, acrylonitrile/butadiene/styrene copolymer (ABS) resins, polycarbonate, poly(methyl methacrylate) and vinyl chloride resins.

The curable liquid silicone rubber composition used in the present method comprises a liquid organopolysiloxane containing reactive groups in combination with a crosslinker and/or curing catalyst capable of reacting with these reactive groups. The curable composition can be a liquid or paste at room temperature, and cures into a rubbery elastomer by standing at room temperature or by heating. Sag and non-sag types are permissible.

The mechanism by which the composition cures to form a silicone rubber can be an addition reaction, an organoperoxide-initiated free radical reaction, or a condensation reaction. Compositions that cure by an addition reaction are preferred from the standpoints of a rapid curing rate and good uniformity in curing.

A particularly preferred type of addition reaction curable silicone rubber composition comprises A) an organopolysiloxane having at least two lower alkenyl groups in each molecule, (B) an organopolysiloxane having at least two silicon-bonded hydrogen atoms in each molecule, and (C) a catalyst comprising a platinum group metal or a compound thereof at a concentration equivalent to from 0.1 to 1,000 parts by weight of said platinum-group metal per million parts by weight (ppm) of the combination of components (A) and (B). In this type of curable composition the sum of the number of alkenyl radicals in each molecule of component (A) plus the number of silicon bonded hydrogen atoms in each molecule of component (B) is at least 5.

Addition reaction curable liquid silicone rubber compositions contain the aforementioned component (A) as their principal ingredient. It is this component which reacts and cures with component (B) in the presence of the catalyst, component (C). Component (A) must contain at least two silicon-bonded lower alkenyl radicals in each molecule. A network structure cannot form when less than two lower alkenyl radicals are present, and a good cured material cannot then be obtained. The lower alkenyl radicals present in component (A) are exemplified by vinyl, allyl and propenyl.

The lower alkenyl radicals can be present at any position in the molecules of component (A), but are preferably located at least at the molecular terminals. Furthermore, the molecular configuration of this component can be linear, branch-containing linear, cyclic, network or three-dimensional, but it is preferably a straight chain molecule which optionally may contain a small amount of branching.

The molecular weight of component (A) is not specifically restricted, and low-viscosity liquids to very high-viscosity gums are encompassed herein. However, to obtain a cured product in the form of a rubbery elastomer, the viscosity of component (A) at 25 degrees C is preferably at least 100 centipoise (0.1 Pa.s).

Organopolysiloxanes suitable as component (A) include but are not limited to vinylpolysiloxanes, methylvinylsiloxane-dimethylsiloxane copolymers, dimethylvinylsiloxy-terminated dimethylpolysiloxanes, dimethylvinylsiloxy-terminated dimethylsiloxane-methylphenylsiloxane copolymers, dimethylvinylsiloxy-terminated dimethylsiloxane-diphenylsiloxane-methylvinylsiloxane copolymers, trimethylsiloxy-terminated dimethylsiloxane-methylvinylsiloxane copolymers, trimethylsiloxy-terminated dimethylsiloxane-methylphenylsiloxane-methylvinylsiloxane copolymers, dimethylvinylsiloxy-terminated methyl(3,3,3-trifluoropropyl)polysiloxanes, dimethylvinylsiloxyterminated dimethylsiloxane-methyl(3,3,3-trifluoropropyl)siloxane copolymers and polysiloxanes composed of $CH_2=CH(CH_3)_2SiO_{1/2}$ units, $(CH_3)_3SiO_{1/2}$ units and $SiO_{4/2}$ units. Combinations of the aforementioned organopolysiloxanes can be used in the present invention.

The component (B) used in the present invention is a crosslinker for component (A). Curing of the composition proceeds by the addition reaction of the silicon-bonded hydrogen atoms in this component with the lower alkenyl radicals in component (A) under the catalytic activity of component (C). In order to function as a crosslinker, component (B) must contain at least two silicon-bonded hydrogen atoms in each molecule.

In the addition curable compositions used in accordance with the present method, the sum of the number of alkenyl radicals per molecule of component (A) plus silicon-bonded hydrogen atoms per molecule of component (B) is at least 5. A sum below 5 is undesirable because a network structure essentially cannot then be formed and a good molding cannot be produced.

The molecular configuration of component (B) is not particularly restricted, and it may be linear, branch-containing linear or cyclic. Similarly, the molecular weight of this component is not specifically restricted, however the viscosity at 25 degrees C is preferably from 1 to 50,000 cP (0.001 to 50 Pa.s) in order to obtain good miscibility with component (A).

The amount of component (B) required in a curable composition is sufficient to provide from 0.5 to 20 moles of silicon-bonded hydrogen for each mole of lower alkenyl radicals in component (A). A good curability is not obtained when this value is below 0.5, while at values above 20 the hardness of the cured product will increase when it is heated. If additional alkenyl-substituted siloxanes other than those corresponding to the definition of component (A) are added to the curable silicone rubber composition with the intent of providing additional reinforcement or for other purposes, it is desirable that an additional quantity of component (B) be present to maintain the desired molar ratio of silicon bonded hydrogen atoms to lower alkenyl radicals.

Concrete examples of component (B) include but are not limited to trimethylsiloxy-terminated methylhydrogenpolysiloxanes, trimethylsiloxy-terminated dimethylsiloxane-methylhydrogensiloxane copolymers, dimethylhydrogensiloxy-terminated dimethylsiloxane-methylhydrogensiloxane copolymers, dimethylsiloxane-methylhydrogensiloxane cyclic copolymers, copolymers composed of $(CH_3)_2HSiO_{1/2}$ and $SiO_{4/2}$ units, and copolymers composed of $(CH_3)_3SiO_{1/2}$, $(CH_3)_2HSiO_{1/2}$ and $SiO_{4/2}$ units.

Component (C) is a catalyst for the addition reaction of silicon-bonded hydrogen atoms and alkenyl radicals. Catalysts for this reaction are metals belonging to the platinum group of the periodic table of the elements and compounds of these metals. Specific examples of suitable catalysts include but are not limited to chloroplatinic acid, including solutions of this compound dissolved in an alcohol or ketone and optionally aged, chloroplatinic acid-olefin complexes, chloroplatinic acid-alkenylsiloxane complexes, chloroplatinic acid-diketone complexes, platinum black and platinum supported on a solid carrier.

The catalyst is present at a concentration equivalent to from 0.1 to 1,000 ppm by weight of the platinum-group metal present in the catalyst, based on the combined weight of components (A) and (B). The crosslinking reaction will not proceed satisfactorily at catalyst concentrations below 0.1 ppm, and the use of more than 1,000 ppm by weight is uneconomical. In typical compositions the quantity of catalyst is equivalent to from about 1 to about 100 ppm of the platinum-group metal.

At least one type of filler can be blended into the curable liquid silicone rubber composition used in the present method for the purpose of regulating the fluidity and improving the mechanical strength of the molding. Such fillers are exemplified by reinforcing fillers such as precipitated silica, fumed silica, calcined silica and fumed titanium oxide, as well as by non-reinforcing fillers such as pulverized quartz, diatomaceous earth, asbestos, aluminosilicic acid, iron oxide, zinc oxide and calcium carbonate. The surfaces of these fillers may optionally be treated with an organosilicon compound such as hexamethyldisilazane, trimethylchlorosilane or polymethylsiloxane.

In order to inhibit the curing reaction, a small or very small quantity of an additive such as an acetylenic compound, a hydrazine, a triazole, a phosphine, a mercaptan, or other known catalyst inhibitor can be added to the organopolysiloxane composition used in the present invention, unless this ingredient adversely affects the object of the invention. In addition, other additives and modifiers including but not limited to pigments, heat stabilizers, flame retardants, and plasticizers may optionally be added.

Other preferred liquid silicone rubber compositions cure by an organoperoxide-initiated free radical reaction. These compositions comprise, in addition to the organoperoxide, a vinyl-substituted diorganopolysiloxane which is liquid or paste at room temperature. The inorganic fillers and other additives mentioned hereinbefore in connection with the addition reaction curable liquid silicone rubber compositions can be present. The organoperoxide used to initiate the curing reaction is preferably selected from among those with a decomposition temperature within the range of from +25 to +100 degrees C.

In accordance with the present injection molding method a thermoplastic organic resin is injected into the mold cavity and allowed to harden, after which a curable liquid silicone rubber composition is injected into the mold cavity and cured. The curing temperature for the liquid silicone rubber composition must be from 25 degrees C up to and including the softening temperature of the thermoplastic resin.

Curing the silicone rubber composition at temperatures below 25 degrees C results in a reduced curing rate and a lowering of the production rate. Exceeding the softening temperature of the thermoplastic resin precludes production of a composite with a high dimensional accuracy.

In accordance with a preferred method for preparing a liquid silicone rubber composition which cures by an addition reaction, premature curing of the composition is prevented by blending the ingredients of the curable composition and storing the resultant composition at temperatures below ambient temperature, which is typically about 25 degrees C. The temperature at which the ingredients of the addition curable liquid silicone rubber composition are blended is preferably in the range of from -60 to +5 degrees C, more preferably from -30 to 0 degrees C.

At below -60 degrees C, the organopolysiloxane tends to gel, and so cannot be injection molded. The addition type curing reaction proceeds at above +5 degrees C, with the result that injection molding of the composition will become difficult, and a composite with a high dimensional accuracy cannot be produced.

The method of the present invention requires at least one injection of thermoplastic resin and one of curable liquid silicone rubber composition per composite article, however a total of three or more injection processes per article is permissible. In the latter case, "primary injection" of the thermoplastic resin and "secondary injection" of the curable liquid silicone rubber composition refer to the sequential relationship between two successive injection processes.

The metal mold used in the method of the present invention may be divisible into top and bottom or left and right sections. It may consist of a single metal mold or several molds can be assembled to form the cavity into which the compositions are injected. Any of the various types of metal molds known in the art can be used in the present method.

In one embodiment of the present method the thermoplastic resin is injected first and allowed to harden, after which the liquid silicone rubber composition is injected into the interior of the same mold cavity. Alternatively, the thermoplastic resin is first injected into the cavity of a metal mold and allowed to harden, this metal mold is then opened to expose a surface of the thermoplastic resin molding, another metal mold having a molding concavity is then clamped onto the metal mold containing said thermoplastic resin molding, and the liquid silicone rubber composition is then injected into the interior of the cavity formed in a continuous manner with the cavity into which the thermoplastic resin was injected.

A primer may be used in the present invention in order to improve bonding between the thermoplastic resin and the liquid silicone resin composition. When a primer is used, the thermoplastic resin is injected first and allowed to harden. The metal mold is then opened to expose a surface of the molding, and the exposed surface of the thermoplastic resin molding is coated or sprayed with the primer. The mold is then reassembled, following which the liquid silicone rubber composition injected onto the coated surface of the molding and subsequently cured. Suitable primers include those based on titanate esters and those based on silane coupling agents.

The aforementioned preferred embodiment of the present invention is readily executed using the combination of a cooling device with a known injection molder for liquid silicone rubber and using well-known thermoplastic molders and metal molds.

Using the method of the present invention, silicone rubber and thermoplastic resin composites can be produced at high production rates, which is very nearly impossible in the prior art.

The following examples describe preferred embodiments of the present method and should not be interpreted as limiting the invention defined in the accompanying claims. Unless otherwise stated all parts and percentages in the examples are by weight and reported viscosity values were measured at 25 degrees C.

Example 1

Thirty parts of wet-method silica with a specific surface of 200 m$^2$/g and 2.5 parts of a trimethylsiloxy-terminated methylhydrogenpolysiloxane containing 1 wt% SiH and having a viscosity of 10 cP were mixed into 100 parts of a dimethylvinylsiloxy-terminated dimethylpolysiloxane exhibiting a viscosity of 2,000 cP (2Pa.s) and a vinyl content of 0.25 wt%. The resultant mixture, referred to hereinafter as A, exhibited a viscosity of 5,000 P (500 Pa.s) using a viscometer speed equivalent to a shear rate of 10 sec$^{-1}$.

Thirty parts of the same type of wet-method silica described for part A and 0.1 part of an isopropanol solution of chloroplatinic acid (platinum content = 3 wt%) were mixed into 100 parts of the same type of dimethylpolysiloxane used in part A and blended to obtain a mixture (mixture B).

Mixture A was placed in a liquid silicone rubber composition tank and mixture B was similarly placed in another liquid silicone rubber composition tank. Using a pressure pump, the are two mixtures were conveyed to a static mixer in a 1:1 weight ratio. The mixer had been cooled to -5 degrees C in advance by means of circulating refrigerant, and the resultant product was a liquid curable silicone rubber composition of this invention.

Nylon 66 resin (from Toray Industries, Inc.) was charged to a thermoplastic resin injection molder and melted at a temperature within the range of from of 230 to 250 degrees C.

A mold assembly suitable for use in accordance with the present method was prepared by setting up a sequential injection molding device. The device consisted essentially of a first lower, stationary metal mold having a molding concavity; a second lower, stationary metal mold having a molding concavity identical to that of the first lower, stationary metal mold; a first upper, movable metal mold having both a passage for the primarily injected material and a gate; and a second upper, movable metal mold having a molding concavity, a passage for secondary injection and a gate.

The mold assembly was configured in a manner such that the two upper, movable metal molds could be alternately clamped onto the two lower, stationary metal molds, allowing the first upper, movable metal mold to close off the molding concavity of the lower, stationary metal molds, thereby forming a partial cavity while the second upper, movable metal mold combined with the lower, stationary metal molds to define a molding cavity corresponding to the shape of the final article.

Using this mold configuration, the aforementioned nylon 66 resin was injected into the partial cavity formed by clamping the first upper, movable metal mold onto the first lower, stationary metal mold and allowed to solidify. The injection time was 10 seconds and time required for solidification was 40 seconds.

The first upper, movable metal mold was then removed, and the exposed surface of the nylon 66 resin molding was coated with a titanate ester-based primer. The second upper, movable metal mold was then clamped down onto the first lower, stationary metal mold containing the primed nylon resin molding. The liquid silicone rubber composition prepared and cooled as described in the preceding section of this example was injected into the interior of the newly formed mold cavity and then cured. The conditions used to inject and cure the silicone rubber composition were an injection time of 10 seconds, a heating time of 30 seconds, and a temperature within the cavity of 70 degrees C. The weight ratio of the nylon resin to the silicone rubber composition was 1:1.

The resultant composite was a dumbbell-shaped molding in which the cured product from the liquid silicone rubber composition was tightly bonded to the nylon 66 resin. The interface between the two sections of the composite was smooth, the dimensional accuracy was very good, and the production rate was high. A portion of each section of the composite was inserted into one of the two chucks of a tensile strength tester, and the tensile strength of the composite was measured. Failure occurred in the silicone rubber section, but the interface between the two sections was undamaged. The breaking strength was 30 kg/cm$^2$.

Example 2

ABS resin (an acrylonitrile/butadiene/styrene copolymer identified as Toyolac T-100 from Toray Industries, Inc.) was charged into a thermoplastic resin injection molder and plasticized within the temperature range of from 200 to 230 degrees C.

Using the sequential injection molding device described in the preceding Example 1, the molten thermoplastic resin was injected into the interior of the partial cavity formed by clamping the first upper, movable metal mold on the first lower, stationary metal mold and allowed to solidify. The conditions used were an injection time of 10 seconds, a curing time of 40 seconds, an injection pressure of 400 kg/cm$^2$ and a mold-clamping pressure of 10 tons.

The temperature of the first lower, stationary metal mold was 50 degrees C. The first upper, movable metal mold was then removed, and the first lower, stationary metal mold containing the ABS resin molding was clamped together with the second upper, movable metal mold in order to form the molding cavity for the final article.

A curable liquid silicone rubber composition that had been prepared and cooled as described in Example 1 was then injected into the interior of this cavity as described in Example 1. The conditions for injection and curing of the silicone rubber composition were an injection time of 10 seconds, a heating time of 50 seconds, an injection pressure of 150 kg/cm$^2$, a mold-clamping pressure of 15 tons (133 kilonewtons), and a mold cavity temperature of 50 degrees C. The weight ratio of the ABS resin to the silane rubber composition was 1:1.

The obtained composite was a dumbbell-shaped molding in which the cured product obtained from the liquid silicone rubber composition had been bonded to the ABS resin. The interface between the two materials was smooth and the dimensional accuracy was excellent.

## Claims

1. A method for injection molding composites comprising at least one layer of a silicone rubber and at least one layer of thermoplastic organic resin, comprising the steps of:

   1) injecting a thermoplastic organic resin into the interior of a cavity formed from at least one metal mold,
   2) allowing said resin to solidify,
   3) injecting a curable liquid silicone rubber composition into the mold cavity which is partially occupied by the solidified thermoplastic resin,
   4) optionally repeating the sequence of steps 1), 2) and 3), and
   5) curing the liquid silicone rubber composition at a temperature of from 25 degrees C up to and including the softening point of said thermoplastic resin.

2. A method according to claim 1, wherein said curable liquid silicone rubber composition comprises:

   (A) an organopolysiloxane having at least 2 lower alkenyl groups in each molecule,

   (B) an organopolysiloxane having at least 2 silicon-bonded hydrogen atoms in each molecule, and
   (C) a catalyst comprising a platinum-group metal or a compound thereof in an amount equivalent to from 0.1 to 1,000 ppm by weight of platinum-group metal, based on the combined weight of components (A) and (B),

   wherein the sum of alkenyl groups in each molecule of component (A) and the silicon bonded hydrogen atoms in each molecule of component (B) is at least 5.

3. A method according to claim 2, wherein the temperature at which the components of said curable liquid silicone rubber composition are blended, and the temperature at which the resultant composition is maintained prior to injection are within the range of from -60 to +5 degrees C.

4. A method according to any of claims 1 to 3 wherein the sequence of steps (1) and (2) as defined in claim 1 is repeated at least once prior to curing of the silicone rubber composition.

5. A method according to claim 4, wherein step (1) of claim 1 is repeated following the final repetition of step (2) of claim 1 and prior to curing of the silicone rubber composition.

6. A method according to claim 1, wherein step (1) of claim 1 is repeated following step (2) of claim 1 and prior to curing of the silicone rubber composition.

7. A method according to claim 1, wherein the surface of the thermoplastic resin in contact with the silicone rubber is coated with a primer prior to injection of the curable liquid silicone rubber composition into said mold cavity.

8. A method according to claim 7 wherein said primer is a titanate ester or a silane coupling agent.

## Revendications

1. Un procédé de moulage par injection d'articles composites comprenant au moins une couche d'un caoutchouc de silicone et au moins une couche de résine organique thermoplastique, comprenant les étapes suivantes :

   1) injecter une résine organique thermoplastique à l'intérieur d'une cavité formée par au moins un moule métallique,

2) laisser ladite résine se solidifier,

3) injecter une composition de caoutchouc de silicone liquide durcissable dans la cavité du moule qui est partiellement occupée par la résine thermoplastique solidifiée,

4) facultativement, répéter la séquence d'étapes 1), 2) et 3), et

5) faire durcir la composition de caoutchouc de silicone liquide à une température située de 25 degrés C jusqu'à et y compris le point de ramollissement de ladite résine thermoplastique.

2. Un procédé selon la revendication 1, dans lequel ladite composition de caoutchouc de silicone liquide durcissable comprend :

(A) un organopolysiloxane dont chaque molécule comporte au moins 2 groupes alcényles inférieurs,

(B) un organopolysiloxane dont chaque molécule comporte au moins 2 atomes d'hydrogène liés au silicium, et

(C) un catalyseur comprenant un métal du groupe du platine ou un composé d'un tel métal en une quantité équivalente à 0,1 à 1000 ppm en poids de métal du groupe du platine par rapport au poids total des composants (A) et (B),

la somme des groupes alcényles de chaque molécule du composant (A) et des atomes d'hydrogène liés au silicium de chaque molécule du composant (B) étant d'au moins 5.

3. Un procédé selon la revendication 2, dans lequel la température à laquelle sont mélangés les composants de ladite composition de caoutchouc de silicone liquide durcissable et la température à laquelle est maintenue la composition résultante avant l'injection se situent dans l'intervalle de -60 à +5 degrés C.

4. Un procédé selon l'une quelconque des revendications 1 à 3, dans lequel la séquence des étapes (1) et (2) telles que définies dans la revendication 1 est répétée au moins une fois avant le durcissement de la composition de caoutchouc de silicone.

5. Un procédé selon la revendication 4, dans lequel l'étape (1) de la revendication 1 est répétée à la suite de la dernière répétition de l'étape (2) de la revendication 1 et avant le durcissement de la composition de caoutchouc de silicone.

6. Un procédé selon la revendication 1, dans lequel l'étape (1) de la revendication 1 est répétée à la suite de l'étape (2) de la revendication 1 et avant le durcissement de la composition de caoutchouc de silicone.

7. Un procédé selon la revendication 1, dans lequel la surface de la résine thermoplastique qui est en contact avec le caoutchouc de silicone est enduite d'un apprêt avant l'injection de la composition de caoutchouc de silicone liquide durcissable dans ladite cavité de moule.

8. Un procédé selon la revendication 7, dans lequel ledit apprêt est un ester titanique ou un agent de couplage du type silane.

**Patentansprüche**

1. Verfahren zum Spritzgießen von Verbundwerkstoffen, enthaltend mindestens eine Schicht eines Siliconkautschuks und mindestens eine Schicht eines thermoplastischen organischen Harzes mit den Schritten:

(1) Einspritzen eines thermoplastischen organischen Harzes in das Innere eines Hohlraumes mindestens einer Metallform,

(2) Ermöglichen der Verfestigung des Harzes,

(3) Einspritzen einer härtbaren flüssigen Siliconkautschukzusauaensetzung in den Formhohlraum, der teilweise vom verfestigten thermoplastischen Harz besetzt ist

(4) gegebenenfalls Wiederholen der Schrittfolge der Schritte (1), (2) und (3) und

(5) Härten der flüssigen Siliconkautschukzusammensetzung bei einer Temperatur von 25$^{\circ}$C bis zu und einschließlich dem Erweichungspunkt des thermoplastischen Harzes.

2. Verfahren nach Anspruch 1,
**dadurch gekennzeichnet,**
daß die härtbare flüssige Siliconkautschukzusammensetzung enthält:

(A) ein Organopolysiloxan mit mindestens zwei niederen Alkenylgruppen in jedem Molekül,

(B) ein Organopolysiloxan mit mindestens zwei an Silizium gebundenen Wasserstoffatomen in jedem Molekül und

(C) einen Katalysator, der ein Metall der Platingruppe oder eine Verbindung desselben enthält, in einer Menge, die äquivalent ist zu von 0,1 bis 1000 ppm des Gewichtes des Platingruppenmetalles, bezogen auf das kombinierte Gewicht der Bestandteile (A) und (B),

wobei die Summe der Alkenylgruppen in jedem Molekül von Bestandteil (A) und den an Silizium gebundenen Wasserstoffatomen in jedem Molekül von Bestandteil (B) mindestens 5 beträgt.

3. Verfahren nach Anspruch 2,
**dadurch gekennzeichnet,**
daß die Temperatur, bei der die Bestandteile der härtbaren flüssigen Siliconkautschuzusammensetzung gemischt werden, und die Temperatur, bei der die erhaltene Mischung vor dem Einspritzen gehalten wird, im Bereich von -60° bis +5°C beträgt.

4. Verfahren nach jedem der Ansprüche 1 bis 3
**dadurch gekennzeichnet,**
daß die Schrittfolge der Schritte (1) und (2) gemäß Anspruch 1 mindestens einmal vor dem Härten der Siliconkautschuzusammensetzung wiederholt wird.

5. Verfahren nach Anspruch 4,
**dadurch gekennzeichnet,**
daß Schritt (1) von Anspruch 1 anschließend an die letzte Wiederholung von Schritt (2) von Anspruch 1 und vor dem Härten der Siliconkautschuzusammensetzung wiederholt wird.

6. Verfahren nach Anspruch 1,
**dadurch gekennzeichnet,**
daß Schritt (1) von Anspruch 1 anschließend an Schritt (2) von Anspruch 1 und vor dem Härten der Siliconkautschuzusammensetzung wiederholt wird.

7. Verfahren nach Anspruch 1,
**dadurch gekennzeichnet,**
daß die Oberfläche des thermoplastischen Harzes, die in Berührung mit dem Siliconkautschuk steht, mit einem Primer vor dem Einspritzen der härtbaren flüssigen Siliconkautschuzusammensetzung in den Formhohlraum überzogen wird.

8. Verfahren nach Anspruch 7,
**dadurch gekennzeichnet,**
daß der Primer ein Titanatester oder ein Silankupplungsmittel ist.